# EUROPEAN PATENT APPLICATION

(11) **EP 4 603 990 A1**
(43) Date of publication of application: **20.08.2025**
(21) Application number: 23878703.0
(22) Date of filing: 29.06.2023
(51) Int. Cl.: G06F 18/15

(54) **DATA PROCESSING METHOD, DEVICE, AND SYSTEM, AND READABLE STORAGE MEDIUM**

(30) Priority: 19.10.2022 CN 202211281467
(71) Applicant: Huawei Technologies Co., Ltd., Shenzhen, Guangdong 518129 (CN)
(72) Inventor: REN, Xiang, Shenzhen, Guangdong 518129 (CN); MA, Qiufang, Shenzhen, Guangdong 518129 (CN)
(74) Representative: Goddar, Heinz J.
(86) International application number: PCT/CN2023/104309
(87) International publication number: WO 2024/082706

(57) **Abstract**

This application provides a data processing method, device, and system, and a readable storage medium, and relates to the communication field. The method includes: A data processing device obtains a data feature of a sampled first data block, and predicts, based on the data feature of data in the first data block, a sampling frequency applicable to a to-be-sampled second data block, to determine a sampling frequency of the to-be-sampled second data block, where the data feature indicates a change between a plurality of valid data values in the first data block. In this way, the data processing device flexibly adjusts a sampling frequency of to-be-sampled data based on a data feature of collected historical data, so that the sampling frequency adapts to a data change. This not only ensures that sampled data has a strong capability of representing the to-be-sampled data, but also reduces redundant data included in the sampled data.

## Description

This application claims priority to Chinese Patent Application No. 202211281467.9, filed with the China National Intellectual Property Administration on October 19, 2022 and entitled "DATA PROCESSING METHOD, DEVICE, AND SYSTEM, AND READABLE STORAGE MEDIUM", which is incorporated herein by reference in its entirety.

### TECHNICAL FIELD

This application relates to the communication field, and in particular, to a data processing method, device, and system, and a readable storage medium.

### BACKGROUND

A telemetry technology supports a data receiving device in remotely collecting data from a data push device like a physical device or a virtual device at a high speed. The data push device actively sends data (such as device data information, a network status, and a service status) to the data receiving device in push mode (Push Mode), to implement a real-time and high-speed data collection function.

However, the data push device usually has a fixed sampling frequency in a sampling process, or adjusts a sampling frequency to one or more fixed sampling frequencies in a data sampling process based on a condition preset based on prior knowledge. In this case, flexibility of adjusting the sampling frequency is poor. Consequently, when the data push device adjusts the sampling frequency, the sampling frequency cannot adapt to a data change, causing a problem that sent data obtained through sampling has a large amount of redundant data or has a weak capability of representing to-be-sampled data.

### SUMMARY

This application provides a data processing method, device, and system, and a readable storage medium, to resolve a problem that sent data has a large amount of redundant data or has a weak capability of representing to-be-sampled data.

According to a first aspect, a data processing method is provided. The data processing method includes: A data processing device obtains a data feature of a sampled first data block, and determines a sampling frequency of a to-be-sampled second data block based on the data feature of the first data block, where the data feature indicates a change between a plurality of valid data values in the first data block.

According to the data processing method, the data feature that is of the sampled first data block and that is obtained by the data processing device indicates the change between the plurality of valid data values in the sampled data, so that it is predicted, based on an association between data, that a data feature of the to-be-sampled second data block is similar to the data feature of the sampled first data block, and a sampling frequency applicable to the to-be-sampled second data block is determined based on the data feature of the sampled first data block. In this way, the predicted sampling frequency adapts to the change between the valid data values in the data, and enough samples that have a capability of representing the second data block can be collected from the second data block. In this way, the data processing device flexibly adjusts a sampling frequency of to-be-sampled data based on a data feature of collected historical data, so that the sampling frequency adapts to a data change. This not only ensures that the sampled data has a strong capability of representing the to-be-sampled data, but also reduces redundant data included in the sampled data.

In a possible implementation, the first data block includes a plurality of data windows, and each data window includes at least one indicator value. The following uses a first data window and a second data window in the first data block as an example to describe how to obtain the data feature of the first data block. In this embodiment, a sequence of the first data window and the second data window is not limited. For example, the data windows in the first data block are sequentially sorted based on a time sequence of data collection. The first data window may be a previous data window whose data collection time is earlier than data collection time of the second data window, or may be a next data window whose data collection time is later than data collection time of the second data window. Therefore, the data processing device divides the first data block into the plurality of data windows, and uses a data feature between the plurality of data windows to represent the data feature of the first data block, so that the data feature can represent a change trend of the data in the first data block, for example, a change of the valid data value in the data window of the first data block with time.

In a possible implementation, when obtaining the data feature of the first data block, the data processing device first determines a first valid data value of the first data window and a second valid data value of the second data window, and then determines that the data feature of the first data block is a change value between the second valid data value and the first valid data value.

Optionally, the data processing device uses a quantity of pieces of valid data included in a sparsified data window as the valid data value. The first data window and the second data window are used as an example. The data processing device separately sparsifies the first data window and the second data window, uses a quantity of pieces of valid data in the sparsified first data window as the first valid data value, and uses a quantity of pieces of valid data in the sparsified second data window as the second valid data value.

The valid data is an indicator value that meets a valid threshold condition. In this embodiment, the valid threshold condition is used to determine whether an indicator value included in the data window is necessary data for representing the data feature of the data window, and a specific limitation manner of the valid threshold condition is not limited. For example, the valid threshold condition refers to using an indicator value greater than or equal to a preset valid threshold in the sparsified data window as the valid data. If a value of the preset valid threshold is zero, the valid data value is a sparse degree of the sparsified data window. Therefore, the data processing device can quickly determine data features of the plurality of data windows in the first data block according to the sparsification manner, so that the sampling frequency of the second data block can be quickly adjusted based on the change between the valid data values (for example, sparse degrees) of the plurality of data windows in the first data block. This improves efficiency of adjusting the sampling frequency and ensures real-time performance of adjusting the sampling frequency.

In a possible implementation, the data processing device determines the sampling frequency of the second data block based on a data feature of the first data window and a data feature of the second data window, that is, determines the sampling frequency of the second data block based on a change of the second valid data value relative to the first valid data value.

Optionally, when a difference between the first valid data value and the second valid data value meets a preset frequency decrease condition, the data processing device determines the sampling frequency of the second data block based on a sampling frequency corresponding to the first data window.

For example, when the difference between the first valid data value and the second valid data value meets the preset frequency decrease condition, the data processing device decreases the sampling frequency of the first data window, and samples the second data window based on a decreased sampling frequency to obtain a data subset. If a change value between the first valid data value and a valid data value of the data subset is less than or equal to a preset threshold, the current sampling frequency of the first data window is decreased again, and the second data window is sampled based on a decreased sampling frequency to obtain a data subset. In this way, the sampling frequency is successively decreased on the basis of the sampling frequency of the first data window until a change value between the first valid data value and a valid data value of a data subset is greater than the preset threshold, and a sampling frequency obtained through the current frequency decreasing is used as the sampling frequency of the second data block.

Optionally, when a difference between the first valid data value and the second valid data value meets a preset frequency increase condition, the data processing device obtains the sampling frequency of the second data block based on a sampling frequency corresponding to the first data window.

For example, when the difference between the first valid data value and the second valid data value meets the preset frequency increase condition, the data processing device increases the sampling frequency of the first data window, and samples the second data window based on an increased sampling frequency to obtain a data subset. If a change value between the first valid data value and a valid data value of the data subset is greater than a preset threshold, the current sampling frequency of the first data window is increased again, and the second data window is sampled based on an increased sampling frequency to obtain a data subset. In this way, the sampling frequency is successively increased on the basis of the sampling frequency of the first data window until a change value between the first valid data value and a valid data value of a data subset is less than or equal to the preset threshold, and a sampling frequency obtained through the current frequency increasing is used as the sampling frequency of the second data block.

In this embodiment, the preset frequency decrease condition indicates a redundancy limitation of a sampled sample in the second data window, and the preset frequency increase condition indicates a data representation capability limitation of the sampled sample in the second data window. Specific forms of the preset frequency decrease condition and the preset frequency increase condition are not limited in this embodiment.

For example, the preset frequency decrease condition includes that a sum of the first valid data value and the preset threshold is greater than or equal to the second valid data value, and the preset frequency increase condition includes that a sum of the first valid data value and the preset threshold is less than the second valid data value. The preset threshold indicates that a quantity of pieces of valid data included in the sample can represent a change range of the to-be-collected data.

Therefore, the data processing device gradually increases or decreases the sampling frequency in a frequency adjustment process based on the preset frequency increase condition and the preset frequency decrease condition, to determine the sampling frequency applicable to the second data block, so as to avoid excessive frequency increase or frequency decrease, and enable the adjustment of the sampling frequency to be more accurate. In addition, the foregoing frequency adjustment manner of the sampling frequency of the to-be-sampled data is performed based on a feature of the data, and no prior experience needs to be introduced, thereby improving an automation degree of the adjustment of the sampling frequency.

In a possible implementation, the data processing device introduces a neural network model, and uses the neural network model to implement a function of determining the sampling frequency of the second data block based on the data feature of the first data block, so as to improve overall efficiency of predicting the sampling frequency of the to-be-sampled data.

Optionally, the data processing device performs model training by using the data feature of the first data block as a sample and using a sampling frequency of the first data block as a label, to obtain a trained neural network model. The neural network model has a function of predicting the sampling frequency of the to-be-sampled data based on the data feature of the sampled data. After configuring the trained neural network model, the data processing device inputs the data feature of the first data block into the neural network model, to obtain the sampling frequency that is of the second data block and that is output by the neural network model.

In a possible implementation, the data processing method is performed by the data processing device, and the data processing device may be a data transmitting end or a data receiving end.

For example, the data processing device is the data transmitting end. After determining the sampling frequency of the second data block, the data transmitting end further samples the second data block based on the sampling frequency of the second data block, to obtain transmission data, and sends the transmission data to the data receiving end, to complete a complete data push procedure.

For another example, the data processing device is the data receiving end. After determining the sampling frequency of the second data block, the data receiving end further sends the sampling frequency of the second data block to the data transmitting end, so that the data transmitting end samples the second data block based on the sampling frequency of the second data block, to obtain transmission data, and then the data receiving end receives the transmission data sent by the second data block.

When the data processing device is the data receiving end, after receiving the transmission data sent by the second data block, the data receiving end may further analyze the transmission data to obtain an analysis result of the transmission data. A manner of performing data analysis on the transmission data is not limited in this embodiment. For example, the analysis result may be a network quality diagnosis result, a device hardware performance evaluation result, a network fault locating result, or the like.

In this embodiment, in addition to the data feature of the data, the sampling frequency of the second data block may further be related to a data requirement of a data receiver. For example, the data receiving end may send a sampling frequency constraint condition to the data transmitting end, so that the sampling frequency of the second data block meets the sampling frequency constraint condition while adapting to a data change of the to-be-sampled data.

According to a second aspect, a data processing device is provided, and includes a memory and a processor. The memory is configured to store a group of computer instructions. When executing the group of computer instructions, the processor is configured to perform operation steps of the data processing method in any possible design of the first aspect.

According to a third aspect, a data processing system is provided, and includes a frequency adjustment module, a reporting module, and a receiving module. The frequency adjustment module is configured to perform the operation steps in the first aspect: obtaining a data feature of a first data block and determining a sampling frequency of a second data block based on the data feature of the first data block. The reporting module is configured to: sample the second data block based on the sampling frequency of the second data block, to obtain transmission data, and send the transmission data to the receiving module. The receiving module is configured to receive the transmission data.

In a possible implementation, the data processing system further includes an analysis module. The analysis module is configured to analyze the transmission data read from the receiving module, to obtain an analysis result of the transmission data.

In a possible implementation, the data processing system further includes a control module. The control module is configured to send a sampling frequency constraint condition to the frequency adjustment module based on the analysis result.

In this embodiment, the frequency adjustment module, the reporting module, the receiving module, the analysis module, and the control module may be respectively disposed on different data processing devices, or a plurality of modules of the frequency adjustment module, the reporting module, the receiving module, the analysis module, and the control module may be integrated into one data processing device. For example, the frequency adjustment module and the reporting module may be integrated into a data sending module, and the receiving module, the analysis module, and the control module may be integrated into a data receiving module. For another example, the frequency adjustment module, the receiving module, the analysis module, and the control module may be integrated into a data receiving module, and the reporting module is disposed on a data sending module.

It should be noted that the data processing system in the third aspect may include a terminal device or a network device, may include a chip (system) or another component or assembly that may be disposed in the terminal device or the network device, or may be a system that includes the terminal device or the network device. This is not limited in this application.

According to a fourth aspect, a readable storage medium is provided, and includes computer software instructions. When the computer software instructions are run in a data processing device, the data processing device is enabled to perform operation steps of the method according to any possible implementation of the first aspect.

According to a fifth aspect, a computer program product is provided. When the computer program product runs on a computer, a data processing device is enabled to perform operation steps of the method according to any possible implementation of the first aspect.

In addition, for technical effects of the data processing device in the second aspect, the data processing system in the third aspect, the readable storage medium in the fourth aspect, and the computer program product in the fifth aspect, refer to the technical effects of the data processing method in the first aspect. Details are not described herein again.

In this application, the implementations provided in the foregoing aspects may be further combined to provide more implementations.

### BRIEF DESCRIPTION OF DRAWINGS

FIG. 1 is a diagram of a structure of a telemetry system according to this application;
FIG. 2 is a schematic flowchart of a telemetry service according to this application;
FIG. 3 is a diagram of a sparse representation of a sparse signal according to this application;
FIG. 4 is a diagram of an architecture of a data processing system according to this application;
FIG. 5 is a schematic flowchart of a data processing method according to this application;
FIG. 6 is a schematic flowchart of steps of determining a change value of a sparse degree according to this application;
FIG. 7 is a schematic flowchart of steps of adjusting a sampling frequency according to this application; and
FIG. 8 is a diagram of a structure of a data processing device according to this application.

### DESCRIPTION OF EMBODIMENTS

For ease of understanding, the following first describes related terms in embodiments of this application.

### (1) Telemetry (Telemetry)

The telemetry is a next-generation network monitoring technology that remotely collects data from a device at a high speed. The device periodically and actively sends device information to a collector in push mode (Push Mode), to provide a more real-time, high-speed, and accurate network monitoring function. The push mode means that after a client of a data sending device establishes a connection to a server of a data receiving device, when having a message, the server actively pushes data or the message to the client. Specifically, the telemetry organizes data based on a yet another next generation (Yet Another Next Generation, YANG) model, performs encoding by using a mixed language data format, and performs transmission of data by using a remote procedure call (Remote Procedure Call, RPC) protocol, so that data obtaining is more efficient and intelligent interconnection is more convenient. A data indicator of a network device is pushed in real time and at a high speed, so that the telemetry technology can provide basic data support for network problem locating, network quality optimization, and network adjustment. Compared with existing network information collection and display modes, the telemetry can provide more detailed, fine-grained, and real-time network information, and can be used in a scenario like microburst detection of a network.

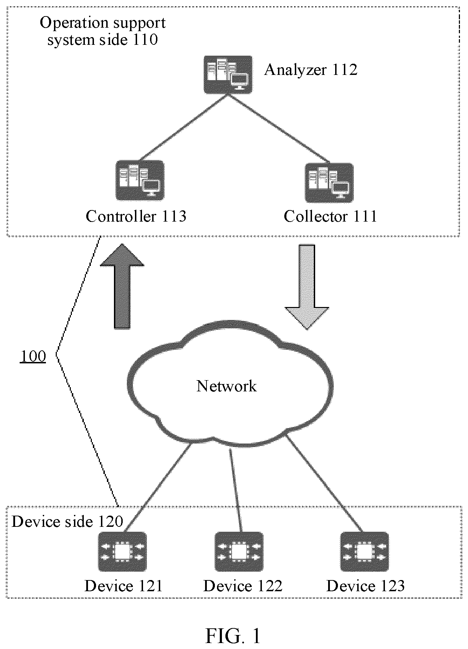

In terms of a structure, the telemetry is a closed-loop automatic operation and maintenance system, is divided into an operation support system (Operation Support System, OSS) side and a device side, and includes the network device, the collector, an analyzer, a controller, and the like. The operation support system side is used to perform data collection, storage, application analysis, and controlling. The device side is used to encode sampled data in an encoding format and perform data transmission by using a transmission protocol. As shown in FIG. 1, an operation support system side 110 of a telemetry system 100 includes a collector 111, an analyzer 112, and a controller 113, and a device side 120 includes one or more network devices, for example, a device 121, a device 122, and a device 123 in FIG. 1. The operation support system side 110 may be a data receiving device integrating the collector 111, the analyzer 112, and the controller 113. The device side 120 may include data sending devices such as the device 121, the device 122, and the device 123.

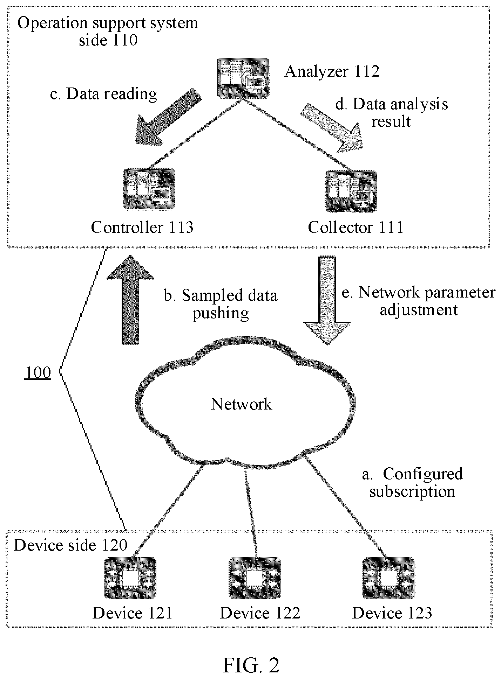

In terms of a service procedure, the telemetry is a subscribe/publish pattern. To be specific, a subscriber on the OSS side subscribes to data that the subscriber is interested in and declares a data sending manner (for example, a sending periodicity), and a publisher sends the data based on the subscription of the subscriber. The telemetry usually supports two subscription manners: static subscription and dynamic subscription. (1) Static subscription: The static subscription is also referred to as configuration subscription. In a manner of delivering a configuration by using a command line or a protocol like a network configuration (Network Configuration, NETCONF) protocol, the configuration subscription is performed on a data source, and data collection is completed. (2) Dynamic subscription: The collector delivers a dynamic RPC subscription operation (for example, a dynamic subscription request is delivered through <establish-subscription> in the NETCONF protocol) to the device side, and completes data collection. The telemetry needs collaboration between the OSS side and the device side. In FIG. 2, that the configuration subscription is performed in the telemetry system 100 is used as an example to describe the configuration subscription, sampled data pushing, data reading, data analysis, and network parameter adjustment, and the like that are included in the telemetry service procedure. Numbers a to e in FIG. 2 represent an execution sequence of the steps.
a. Configured subscription: The device 121, the device 122, and the device 123 subscribe to a data source and another parameter (for example, a sending periodicity), and complete data collection.
b. Sampled data pushing: The device 121, the device 122, and the device 123 report, based on a configuration requirement of the controller 113, collected data to the collector 111 for receiving and storage.
c. Data reading: The analyzer 112 reads the sampled data stored in the collector 111.
d. Data analysis: The analyzer 112 analyzes the read sampled data, and sends an analysis result to the controller 113, so that the controller 113 performs configuration management on a network, and optimizes the network in time.
e. Network parameter adjustment: The controller 113 delivers, to the device 121, the device 122, and the device 123, a configuration that needs to be adjusted in the network. After the configuration is delivered and takes effect, new sampled data is reported to the collector 111. In this case, the OSS side may analyze whether a network effect after the optimization meets an expectation. An entire service procedure does not form a closed loop until the optimization is completed.

### (2) Model-driven architecture (Model-Driven Architecture, MDA)

The model-driven architecture is a software design method used for application system development, and provides a set of guidance specifications for software design. The set of guidance specifications is represented by a model. The model-driven architecture can be for creating machine-readable and highly abstract models. These models are independent of implementation technologies and stored in a standardized manner. In this way, specifications of system operations are separated from details of a manner in which a system uses an underlying platform capability.

The telemetry technology is model-driven. In the telemetry technology, the model-driven means that a user or a network management system can specify a model path to notify a device of data that needs to be pushed, and the data is reported based on descriptions of the model. A unified model is used to describe data on the network device, to help the device implement fine-grained data collection.

### (3) Compressed sensing (Compressed sensing)

The compressed sensing is also referred to as compressive sampling (Compressive sampling) or sparse sampling (Sparse sampling), is a technique for finding a sparse solution to an underdetermined linear system, and is used to obtain and reconstruct a sparse or compressible signal. In the compressed sensing technology, redundant information in current signal sampling is discarded, a compressed sample is obtained through continuous-time signal transformation, and then the compressed sample is processed in digital signal processing by using an optimization method. Therefore, in the compressed sensing technology, a discrete sample of a signal can be obtained in a condition that a sampling rate is far less than a Nyquist sampling rate, to ensure distortion-free reconstruction of the signal.

A core idea of a compressed sensing theory mainly includes a sparse structure and an incoherence characteristic of the signal. In a conventional Shannon (Shannon) signal representation method, only the least prior information of the sampled signal, that is, bandwidth of the signal is exploited and used. However, in real life, many widely concerned signals have some structural characteristics. In comparison with a degree of freedom of bandwidth information, these structural characteristics are determined based on a smaller part of a degree of freedom of the signal. In other words, when there are few information losses, such a signal may be represented by few digital codes. Therefore, such a signal is a sparse signal (or an approximately sparse signal or a compressible signal). Useful information of the sparse signal may be obtained by compressing the signal into small sample data by using a non-adaptive sampling method. It is theoretically proved that a sampling method of the compressed sensing is only a simple operation of correlating a signal with a group of determined waveforms. These waveforms are required to be irrelevant to a sparse space in which the signal is located.

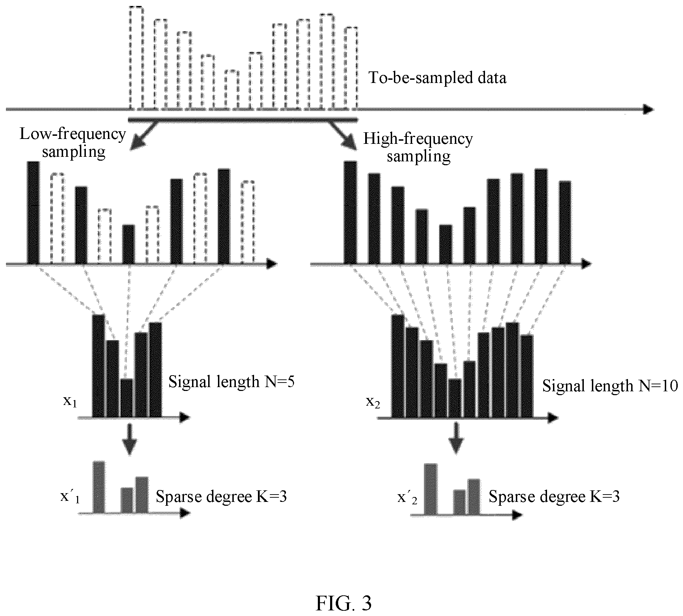

The sparse signal may be converted into a sparse representation by using a sparse representation algorithm. The sparse representation algorithm is used to obtain sparse data that is in the sparse signal and that is related to specific application of the signal, to represent the sparse signal. As shown in FIG. 3, high-frequency or low-frequency sampling is performed on an original signal to obtain a sparse signal x₁ or x₂ with a signal length N. Sparse data that is in the sparse signal and that is related to specific application of the signal may be referred to as valid data, and signal sparsity is usually defined by using a sparse degree K. The sparse degree K is a quantity of non-zero elements in a sparse representation x'₁ or x'₂ after the signal is obtained by sparsifying the signal by using the sparse representation algorithm. A lower sparse degree K indicates a sparser signal, and indicates more redundant data of the sparse signal x₁ or x₂. Distortion-free reconstruction may be performed on the sparse signal x₁ or x₂ when fewer signals are included.

In the existing telemetry technology, the user configures, by using a configured command line or subscription model, a sampling frequency of data sent by the network device. The sampling frequency may be a constant frequency or a variable frequency. For example, configuring the constant sampling frequency may be configuring a fixed adoption frequency for the network device by using the command line. For example, a sampling interval is 1000 seconds. For another example, in the subscription model, a low sampling frequency (for example, a sampling interval is 60 seconds) is configured for a case in which a received signal strength indicator (Received Signal Strength Indicator, RSSI) of a wireless local area network (Wireless Local Area Network, WLAN) is greater than a preset strength (for example, 65 dB), and a high sampling frequency (for example, a sampling interval is 10 seconds) is configured for a case in which a received signal strength indicator of a wireless local area network is less than or equal to a preset strength, to reduce redundant data in the sent data when network quality is good, and ensure enough collected data when the network quality is poor, so as to ensure accuracy of data analysis.

However, for the foregoing adjustment of the constant or variable sampling frequency, a preset condition is set based on prior knowledge, and a matched sampling frequency is used when the preset condition is met, but a feature of the data sent by the device is ignored. When the data sent by the network device changes quickly, the network device can select an applicable sampling frequency only from a limited quantity of preset fixed sampling frequencies based on a sampling frequency adjustment manner used in a conventional technology. Therefore, the sampling frequency adjustment has poor flexibility and cannot adapt to a data change. Consequently, the data sent by the network device includes a large amount of redundant data or the collected data is not enough, and a data analysis requirement cannot be met.

This application provides a data processing method, and in particular, a data processing method for determining a sampling frequency of to-be-sampled data based on a data feature of sampled historical data. To be specific, a data processing device obtains a data feature of a first data block in the sampled data, and then determines a sampling frequency of a to-be-sampled second data block based on the data feature of the first data block. Because the data feature indicates a change between a plurality of valid data values in the first data block, the sampling frequency of the second data block is determined based on the change between the plurality of valid data values in the first data block, so that when the data feature of the sampled data changes, the data processing device flexibly adjusts the sampling frequency of the second data block based on the change of the data feature. In this way, the sampling frequency of the second data block adapts to the data change, to avoid a problem that sent data obtained by the data processing device through sampling has a large amount of redundant data or has a weak capability of representing to-be-sampled data.

The following describes in detail implementations of embodiments of this application with reference to the accompanying drawings.

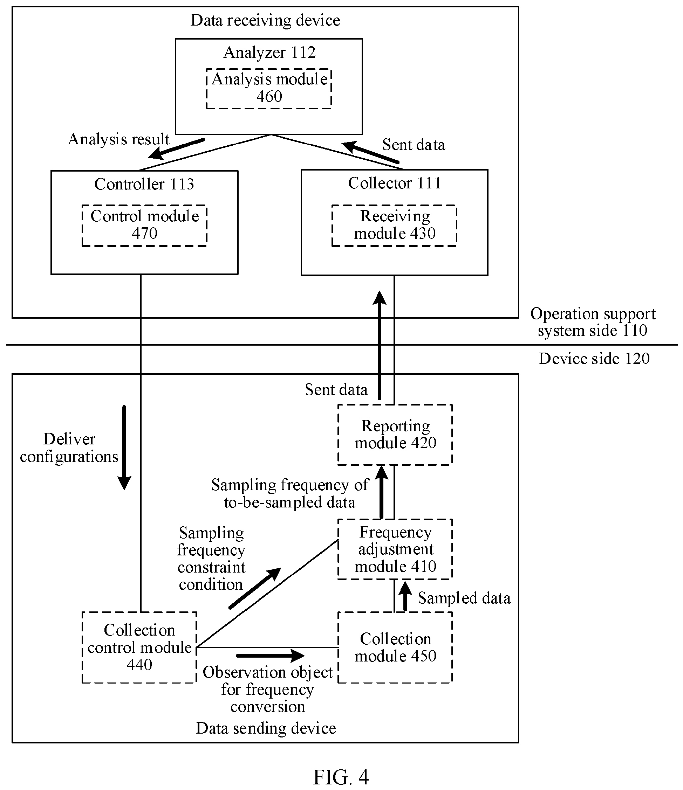

FIG. 4 is a diagram of an architecture of a data processing system according to an embodiment of this application. As shown in FIG. 4, a telemetry system is used as an example. The data processing system 400 includes a frequency adjustment module 410, a reporting module 420, and a receiving module 430.

The frequency adjustment module 410 is configured to: obtain a data feature of a first data block, and determine a sampling frequency of a second data block based on the data feature of the first data block. The first data block is sampled data, the second data block is to-be-sampled data, and the data feature indicates a change between a plurality of valid data values in the first data block.

The reporting module 420 is configured to: sample the second data based on the sampling frequency of the second data block, to obtain transmission data, and send the transmission data to the receiving module 430.

The receiving module 430 is configured to receive the transmission data.

It should be understood that functions of the modules in the data processing system 400 in this embodiment of this application of the present invention may be implemented by a CPU, an ASIC, or a programmable logic device (programmable logic device, PLD). The PLD may be a complex programmable logical device (complex programmable logical device, CPLD), an FPGA, a generic array logic (generic array logic, GAL), or any combination thereof.

The data processing system 400 may further include a collection control module 440, a collection module 450, an analysis module 460, and a control module 470.

The collection control module 440 is configured to: parse a sampling frequency constraint condition delivered by the control module 470, input the first data block used as an observation object for frequency conversion into the collection module 450, and control the frequency adjustment module 410 based on the sampling frequency constraint condition. The observation object for frequency conversion is target sent data declared by the control module 470. The sampling frequency constraint condition is a frequency conversion periodicity constraint. For example, a frequency conversion periodicity∈[5 ms, 10 ms, 1s, and 30s]. For example, the target sent data is Xpath data defined based on a YANG model. The Xpath data is a query condition of a specified node in the YANG model that is used to deliver a configuration like the frequency constraint condition in this embodiment.

The collection module 450 is configured to: receive the first data block input by the collection control module 440, and input the first data block into the frequency adjustment module 410.

The analysis module 460 is configured to analyze the transmission data obtained by the receiving module 430, to obtain an analysis result of the transmission data.

The control module 470 is configured to send the sampling frequency constraint condition to the frequency adjustment module 410 based on the analysis result, so that the frequency adjustment module 410 adjusts the sampling frequency of the to-be-sampled data based on the sampling frequency constraint condition.

When the functions of the modules in the data processing system 400 are implemented by hardware, the hardware may be a data processing device. For example, the data processing device is the data sending device or the data receiving device included in the telemetry system 100 in FIG. 1.

In a possible implementation, the frequency adjustment module 410, the reporting module 420, the collection control module 440, and the collection module 450 are integrated into the data sending device on the device side 120. For example, the device 121 is configured to implement functions of the frequency adjustment module 410, the reporting module 420, the collection control module 440, and the collection module 450. The receiving module 430, the analysis module 460, and the control module 470 are integrated into the data receiving device on the operation support system side 110. For example, the collector 111 is configured to implement a function of the receiving module 430, the analyzer 112 is configured to implement a function of the analysis module 460, and the controller 113 is configured to implement a function of the control module 470.

In another possible implementation, the reporting module 420, the collection control module 440, and the collection module 450 are integrated into the data sending device on the device side 120. For example, the device 121 is configured to implement functions of the reporting module 420, the collection control module 440, and the collection module 450 that are integrated into the device side 120. The frequency adjustment module 410, the receiving module 430, the analysis module 460, and the control module 470 are integrated into the data receiving device on the operation support system side 110. For example, the collector 111 is configured to implement a function of the receiving module 430, the analyzer 112 is configured to implement a function of the analysis module 460, and the controller 113 is configured to implement functions of the frequency adjustment module 410 and the control module 470. In an extended model, a plurality of indicator values may be monitored by using an extended command line.

When the data processing system 400 is implemented by software, the data processing system 400 and the modules of the data processing system 400 each may alternatively be a software module. The controller 113 is configured to: extend an Ietf-adaptive-subscription model based on a model-driven architecture technology, configure the sampling frequency constraint condition, the observation object for frequency conversion, a frequency conversion algorithm, and the like in an extended model, and deliver configurations such as the sampling frequency constraint condition and the observation object for frequency conversion to a data sending module by using the model.

It should be noted that FIG. 4 is merely an example diagram, and should not be understood as a limitation on this application. The modules in the data processing system 400 and the functions of the modules are merely examples based on a telemetry technology. In another embodiment, the data processing system 400 may be further configured with different types of modules based on another architecture in the telemetry technology or an architecture other than that in the telemetry technology. This is not shown in FIG. 4.

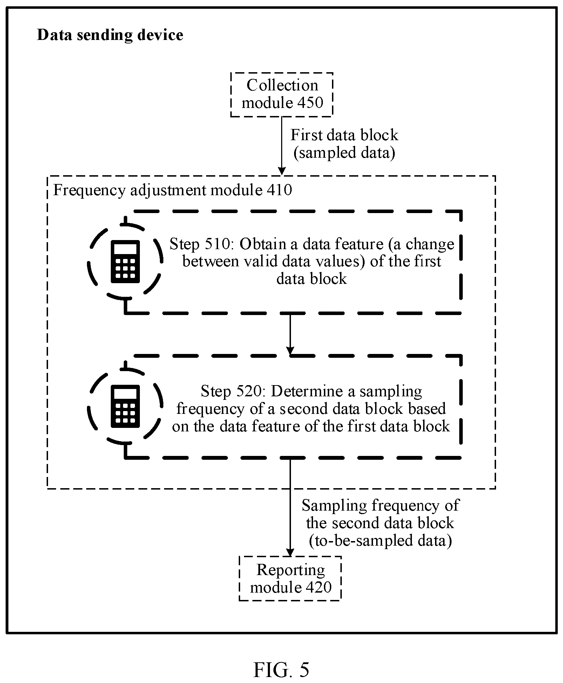

The following describes the data processing method in detail with reference to FIG. 5. The data processing system 100 in FIG. 1 is used as an example herein for description.

Step 510: The data sending device obtains a data feature of a first data block.

The data sending device performs windowing analysis on a change between valid data values in the first data block, to obtain the data feature of the first data block. The windowing analysis means that the data sending device divides, by using a sliding window, the first data block into a plurality of data windows based on a time sequence of collecting data in the first data block, where each data window includes at least one indicator value of an observation object for frequency conversion; and determines the data feature of the first data block based on the change between the valid data values in the plurality of data windows.

The at least one indicator value of the observation object for frequency conversion includes at least one value of an indicator of the observation object for frequency conversion at different moments. For example, if the observation object for frequency conversion is a processor usage indicator, each data window includes processor usage of the processor usage indicator of the data sending device at a plurality of moments in a time period. For another example, if the observation object for frequency conversion is key performance indicator (Key Performance Indicator, KPI) data of the data sending device, each data window includes intactness ratios, comprehensive device efficiency, device availability ratios, device failure rates, mean time between failures of the device, and/or the like of the data sending device at a plurality of moments in a time period.

A first data window and a second data window that are adjacent to each other in the first data block are used as an example. The data sending device determines a first valid data value of the first data window and a second valid data value of the second data window, and determines that the data feature of the first data block is a change value between the second valid data value and the first valid data value. The first data window may be a previous data window adjacent to the second data window, or may be a next data window adjacent to the second data window.

Optionally, the valid data value is a quantity of pieces of valid data included in a sparsified data window. Therefore, the first valid data value of the first data window is a quantity of pieces of valid data counted after the data sending device sparsifies the first data window, and the second valid data value of the second data window is a quantity of pieces of valid data counted after the data sending device sparsifies the second data window.

The data sending device uses an indicator value that meets a valid threshold condition as the valid data, where the valid threshold condition is used to determine whether the indicator value included in the data window is necessary data for representing a data feature of the data window. For example, the valid threshold condition refers to using an indicator value greater than or equal to a preset valid threshold in the sparsified data window as the valid data.

For example, if the valid data value of the data window is a sparse degree of the data window, the data feature of the first data block indicates a change between sparse degrees of the plurality of data windows. The first data window and the second data window are used as an example. The data feature of the first data block includes a change value between a sparse degree of the first data window and a sparse degree of the second data window.

Correspondingly, the valid threshold condition means whether an indicator value obtained through sparsification in the data window is a non-zero value. If the indicator value is a non-zero value, the indicator value is the valid data. If the indicator value is a zero value, the indicator value is not the valid data. During actual application, the data sending device may consider an indicator value less than a fixed value as a zero value, that is, the preset valid threshold may be a zero value or a non-zero value.

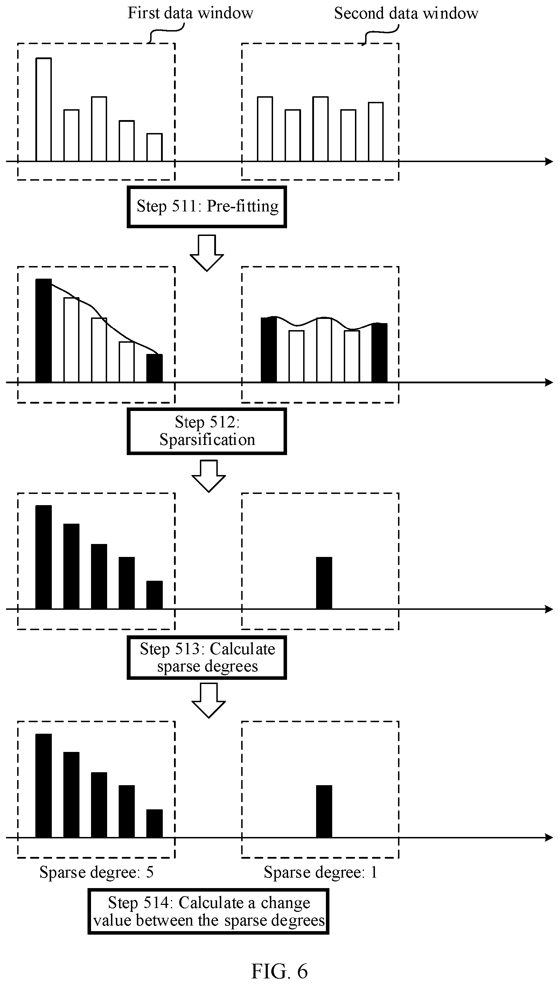

When the valid data value of the data window is the sparse degree of the data window, for steps of determining, by the data sending device, the change value between the sparse degree of the first data window and the sparse degree of the second data window, refer to step 511 to step 514 in FIG. 6. Details are not described herein.

Step 520: The data sending device determines a sampling frequency of a second data block based on the data feature of the first data block.

The data sending device determines the sampling frequency of the second data block based on data features of the plurality of data windows in the first data block.

For example, the data sending device determines the sampling frequency of the second data block based on a data feature of the first data window and a data feature of the second data window. The second data window is separately adjacent to the first data window and the second data block, and the second data block includes at least one unsampled data window.

If the data feature is the change between the valid data values in the data windows, the data sending device determines the sampling frequency of the second data block based on a change of the second valid data value of the second data window relative to the first valid data value of the first data window.

In a possible implementation, the data sending device may determine, based on a preset condition, whether a change of the second valid data value relative to the first valid data value causes a failure to collect enough information in the second data window based on a sampling frequency corresponding to the first data window, or collection of a large amount of redundant information from the second data window.

In the foregoing implementation, when a difference between the first valid data value and the second valid data value meets the preset condition, the data sending device determines the sampling frequency of the second data block based on the sampling frequency corresponding to the first data window. Optionally, the preset condition includes a preset frequency decrease condition and a preset frequency increase condition. When the difference between the first valid data value and the second valid data value meets the preset frequency decrease condition, the data sending device decreases the sampling frequency of the second data block based on the sampling frequency corresponding to the first data window. When the difference between the first valid data value and the second valid data value meets the preset frequency increase condition, the data sending device increases the sampling frequency of the second data block based on the sampling frequency corresponding to the first data window.

That the difference between the first valid data value and the second valid data value meets the preset frequency decrease condition indicates that there is a large amount of redundant data in a sample obtained by sampling the second data block based on the sampling frequency of the first data window. That the difference between the first valid data value and the second valid data value meets the preset frequency increase condition indicates that a sample obtained by sampling the second data block based on the sampling frequency of the first data window has a weak capability of representing the sampled data. That the first valid data value is a sparse degree K1 of the first data window, and the second valid data value is a sparse degree K2 of the second data window is used as an example. The preset frequency decrease condition may be that K1+T≥K2, and the preset frequency decrease condition may be that K1+T<K2, where T is a preset threshold, and the preset threshold indicates that a quantity of pieces of valid data included in the sample, in other words, a sparse degree, can represent a change range of the to-be-collected data.

If K1+T≥K2, to be specific, a change of the sparse degree of the second data window relative to the sparse degree of the first data window is less than the change range represented by T, there is redundant information in the sample obtained by sampling the second data block based on the sampling frequency of the first data window, and there is space for frequency decrease in the sampling frequency of the second data block relative to the sampling frequency of the first data window.

If K1+T<K2, to be specific, a change of the sparse degree of the second data window relative to the sparse degree of the first data window is greater than or equal to the change range represented by T, the sample obtained by sampling the second data block based on the sampling frequency of the first data window includes a small amount of data, has a weak capability of representing the second data block, and the sampling frequency of the second data block needs to be increased relative to the sampling frequency of the first data window.

In the foregoing process, the data sending device determines the sampling frequency of the second data block based on the change between the sparse degree of the first data window and the sparse degree of the second data window. A principle thereof is that, based on a data association, the change between the sparse degree of the first data window and the sparse degree of the second data window is equivalent to a change between the sparse degree of the first data window and a sparse degree of the second data block whose data window is close to the first data window in time. Therefore, a sampling frequency applicable to the second data window is also applicable to the second data block, so that the sampling frequency applicable to the second data window is applied to the second data block.

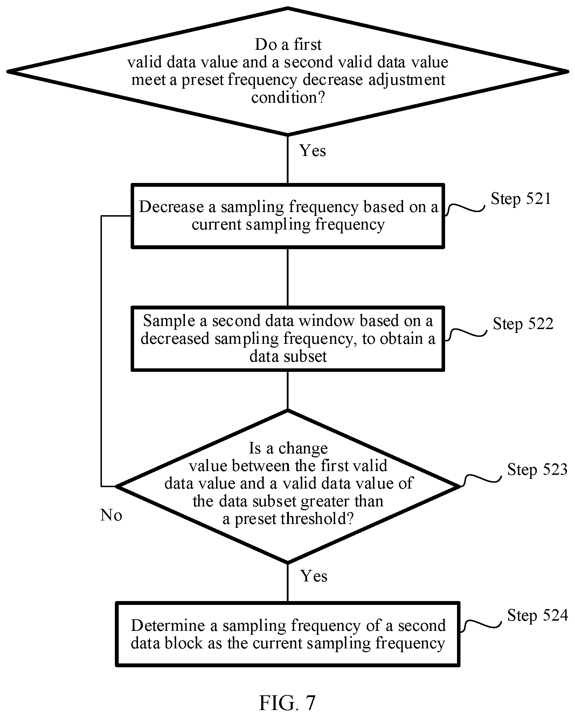

When the first valid data value is the sparse degree K1 of the first data window, and the second valid data value is the sparse degree K2 of the second data window, for specific steps of performing frequency decrease by the data sending device, refer to step 521 to step 524 in FIG. 7. Details are not described herein.

Step 530: The data sending device samples the second data block based on the sampling frequency of the second data block, to obtain transmission data, and sends the transmission data to the data receiving device.

The transmission data obtained by the data sending device by sampling the second data block is a compressed sample in a compressed sensing technology, where the compressed sample can represent information of the second data block, and the transmission data is sent to the data receiving device.

Because the compressed sample may be restored to the second data block after sparse reconstruction, the data sending device sends the compressed sample as the transmission data to the data receiving device. In this way, the transmission data including a small amount of redundant data is ensured, bandwidth occupied for the data transmission is saved, and the transmission data includes enough data that can represent the second data block, to avoid a lack of necessary data when the data receiving device performs data analysis based on the transmission data.

Step 540: The data receiving device receives the transmission data.

The data sending device establishes a communication link to the data receiving device by using a remote procedure call protocol. For example, the data sending device establishes a remote procedure call protocol communication link to the collector 111 in the data receiving device.

Step 550: The data receiving device analyzes the transmission data to obtain an analysis result of the transmission data.

The data receiving device performs running status analysis, fault analysis, network quality analysis, and the like on the data sending device based on the transmission data, to obtain a running status analysis result, a fault analysis result, a network quality analysis result, and the like.

In a possible implementation, if the data analysis has a low requirement on data precision, for example, the data receiving device constructs, based on the transmission data, a rectangular plane coordinate system diagram in which an indicator value changes with time, and displays the rectangular plane coordinate system diagram as the analysis result, the data receiving device does not need to restore the transmission data to the second data block by using a sparse reconstruction algorithm.

In another possible implementation, if the data analysis has a high requirement on data precision, for example, the data receiving device performs fault analysis on the data sending device based on the transmission data, the data receiving device restores the transmission data to the second data block by using a sparse reconstruction algorithm, and then performs fault analysis based on the second data block.

Optionally, the sparse reconstruction algorithm includes an orthogonal matching pursuit algorithm, a gradient algorithm, and the like that are based on iterative greedy matching pursuit, and a basis pursuit algorithm, an iterative thresholding algorithm, and the like that are based on norm minimization.

Step 510 to step 550 are performed by the data sending device or the data receiving device that integrates a plurality of components or modules. Step 510 to step 550 may alternatively be performed by the modules of the data processing system 400 or the components of the telemetry system 100. In this embodiment, the components or modules that perform step 510 to step 550 are not limited.

For example, step 510 and step 520 are performed by the frequency adjustment module 410 of the data sending device, step 530 is performed by the reporting module 420, step 540 is performed by the collector 111 of the data receiving device, and step 550 is performed by the analyzer 112 of the data receiving device.

For another example, step 510 and step 520 are performed by the controller 113 of the data receiving device. After step 520, the controller 113 sends the sampling frequency of the second data block to the data sending module, and the collection control module 440 of the data sending device controls, based on the sampling frequency of the second data block, the reporting module 420 to perform step 530.

According to the foregoing data processing method, during data transmission of the telemetry system, the data sending device determines, based on the data feature of the sampled data, whether there is a large amount of redundant data in the sample obtained from the to-be-sampled data based on the current sampling frequency or the sample obtained from the to-be-sampled data based on the current sampling frequency can represent the information of the to-be-sampled data. Therefore, the sampling frequency of the to-be-sampled data is determined based on a data association principle and the change between the plurality of valid data values in the first data block, so that when the data feature of the sampled data changes, a data processing device flexibly adjusts the sampling frequency of the to-be-sampled data based on the change of the data feature. In this way, the adjustment of the sampling frequency can adapt to the data change, to avoid a problem that the sent data obtained by the data processing device through sampling has a large amount of redundant data or has a weak capability of representing the to-be-sampled data.

The foregoing describes an overall procedure of the data processing method by using step 510 to step 550. The following describes, with reference to FIG. 6, the steps of determining, by the data sending device, the change value between the sparse degree of the first data window and the sparse degree of the second data window. The first data window and the second data window are used as an example. The steps of determining, by the data sending device, the change value between the sparse degree of the first data window and the sparse degree of the second data window after sparsifying the first data window and the second data window may be as follows:
Step 511: The data sending device performs pre-fitting on the first data window and the second data window, to obtain a first pre-fitting result and a second pre-fitting result.

The data sending device performs, based on sampled data included in the first data window and the sampling frequency of the first data window, pre-fitting on the sampled data included in the first data window. The data sending device performs, based on sampled data included in the second data window and the sampling frequency of the second data window, pre-fitting on the sampled data included in the second data window.

Step 512: The data sending device sparsifies the first pre-fitting result and the second pre-fitting result based on a sparse representation algorithm, to obtain a first sparsification result and a second sparsification result.

Optionally, the sparse representation (Sparse Representation) algorithm includes greedy algorithms such as matching pursuit (Matching Pursuit, MP) and orthogonal matching pursuit (Orthogonal Matching Pursuit, OMP) and relaxation algorithms such as iterative reweighted least squares (Iterative Reweighted Least Squares, IRLS) and basis pursuit (Basis Pursuit, BP).

Step 513: The data sending device calculates a sparse degree of the first sparsification result and a sparse degree of the second sparsification result.

The data sending device counts a quantity of non-zero elements in the first sparsification result, to obtain the sparse degree of the first data window. The data sending device counts a quantity of non-zero elements in the second sparsification result, to obtain the sparse degree of the second data window.

Step 514: The data sending device calculates the change value between the sparse degree of the first data window and the sparse degree of the second data window.

The data sending device may calculate the change value between the sparse degrees in any comparison manner that can be used to determine the change between the sparse degree of the first data window and the sparse degree of the second data window.

For example, the data sending device uses a difference between the sparse degree of the second data window and the sparse degree of the first data window as the change value.

For another example, the data sending device uses an increased percentage of the sparse degree of the second data window relative to the second data window as the change value.

Therefore, the data sending device determines, by sparsifying every two adjacent data windows in the first data block, sparse degrees of the plurality of data windows included in the first data block, and calculates a change between sparse degrees of the every two adjacent data windows, in other words, a change between valid data values of the every two adjacent data windows, to quickly and accurately obtain the data feature of the first data block.

The following describes, with reference to FIG. 7, the specific steps of performing frequency decrease by the data sending device. As shown in FIG. 7, that the first valid data value is the sparse degree K1 of the first data window, and the second valid data value is the sparse degree K2 of the second data window is used as an example. When K1+T≥K2, steps of performing, by the data sending device, frequency decrease based on the sampling frequency of the first data window, to obtain the sampling frequency of the second data block may include step 521 to step 524.

Step 521: The data sending device decreases a sampling frequency based on the current sampling frequency.

The data sending device decreases a preset sampling frequency based on the current sampling frequency, to obtain a decreased sampling frequency. When frequency decrease is performed for the first time based on the sampling frequency of the first data window, the current sampling frequency is the sampling frequency of the first data window.

In a possible implementation, the data sending device decreases the preset sampling frequency based on the current sampling frequency and a sampling frequency constraint, to obtain the decreased sampling frequency. The sampling frequency constraint includes a plurality of available ranges for sampling frequency adjustment. For example, frequency conversion periodicities of a sampling frequency constraint condition include [5 ms, 10 ms, 1s, and 30s]. The data sending device starts from a sampling interval of the sampling frequency of 5 ms, and determines a sampling interval of a decreased sampling frequency as a next frequency conversion periodicity each time the sampling frequency is decreased. For example, if a sampling interval of the current sampling frequency is 5 ms, that the data sending device decreases the sampling frequency based on the current sampling frequency is decreasing the sampling frequency to 10 ms.

In another possible implementation, the preset sampling frequency may be flexibly adjusted based on the sampling frequency of the first data window. The preset sampling frequency may be a fixed frequency or a percentage. For example, the preset sampling frequency is a fixed frequency, the sampling frequency of the first data window is 100 hertz, the preset sampling frequency is 10 hertz, and the decreased sampling frequency is 90 hertz. For another example, the preset sampling frequency is a percentage, the sampling frequency of the first data window is 100 hertz, the preset sampling frequency is 20%, and the decreased sampling frequency is 80 hertz.

Step 522: The data sending device samples the second data window based on the decreased sampling frequency, to obtain a data subset.

Step 523: The data sending device determines a change value between the first valid data value and a valid data value of the data subset. If the change value is less than or equal to the preset threshold, step 521 is performed. If the change value is greater than the preset threshold, step 524 is performed.

That the valid data value is a sparse degree is used as an example. The data sending device determines the change value between the first valid data value and the valid data value of the data subset, that is, determines a change value between K1 and a sparse degree K3 of the data subset. The change value may be an absolute value ΔK of a difference between K1 and K3.

If ΔK≤T, the data sending device decreases the preset sampling frequency again based on the current sampling frequency, to obtain a decreased sampling frequency.

For example, the frequency conversion periodicities of the sampling frequency constraint condition include [5 ms, 10 ms, 1s, and 30s], a current sampling frequency obtained by the data sending device by performing step 521 last time is a sampling frequency corresponding to a sampling periodicity 10 ms, that is, 100 hertz, and an adoption frequency obtained through decreasing again is a sampling frequency corresponding to 1s, that is, 1 hertz.

For another example, the preset sampling frequency is a fixed frequency, a current sampling frequency obtained by the data sending device by performing step 521 last time is 90 hertz, the preset sampling frequency is 10 hertz, and a sampling frequency obtained through decreasing again is 80 hertz. Alternatively, the preset sampling frequency is a percentage, a current sampling frequency obtained by the data sending device by performing step 521 last time is 80 hertz, the preset sampling frequency is 20%, and a sampling frequency obtained through decreasing again is 64 hertz.

Step 524: Determine the sampling frequency of the second data block as the current sampling frequency.

That the valid data value is a sparse degree is still used as an example. If ΔK>T, it indicates that a sample obtained by sampling the second data block based on the current sampling frequency includes a small amount of redundant data, and has a strong capability of representing the second data block, and the sampling frequency of the second data block is determined as the current sampling frequency.

In the foregoing embodiment, step 521 to step 524 are performed by the data sending device that integrates the plurality of components or modules. Specifically, step 521 to step 524 are described by using the modules included in the data sending device in the data processing system 400. The collection control module 440 parses a sampling frequency constraint condition delivered by the control module 470, and inputs the first data block used as an observation object for frequency conversion into the collection module 450. The collection module 450 samples the second data window based on a configured initial sampling frequency before frequency decrease is performed for the first time. The frequency adjustment module 410 is configured to determine the sampling frequency of the second data block based on the data feature of the first data block and the sampling frequency constraint condition, that is, step 521 to step 524.

In a possible implementation, the frequency adjustment module 410 may further determine the sampling frequency of the second data block based on the data feature of the first data block via a neural network model, to implement algorithm acceleration for step 521 to step 524. For example, the frequency adjustment module 410 inputs the data feature of the first data block into the neural network model, to obtain the sampling frequency that is of the second data block and that is output by the neural network model. The neural network model is obtained by performing model training by using the data features of the plurality of data windows in the first data block as samples and using sampling frequencies of the plurality of data windows in the first data block as labels. The data sending device or the data receiving device may locally train the neural network model, or may obtain a trained neural network model via a network. The data features and the sampling frequencies that are of the plurality of data windows and that are used as training data of the neural network model may be obtained through calculation based on step 521 to step 524 in an initial effective periodicity of the delivering performed by the control module 470.

In the neural network model, the observation object for frequency conversion is a leaf (leaf) node in an Xpath, and is a learning factor in an algorithm of the neural network model. The leaf node is a key data node type in a YANG model. The YANG model models data into a tree structure. The tree structure includes one or more leaf nodes, and the leaf node has only a value and has no descendant node.

In this embodiment, a learning manner of the neural network model may be but is not limited to a supervised learning (Supervised Learning) manner like a random forest or a semi-supervised learning (Semi-Supervised Learning, SSL) manner like a K-Means clustering algorithm or a density-based clustering (Density-Based Spatial Clustering of Applications with Noise, DBSCAN) algorithm. A training mode of the neural network model may be but is not limited to offline training, online training, federated training, or the like.

Optionally, after outputting the sampling frequency of the second data block, the frequency adjustment module 410 may further return, to the controller 113 or the analyzer 112 based on a diagnostic command, a reason for selecting the sampling frequency of the second data block, to be specific, a sampling frequency used for the second data block causes data redundancy, and a sampling frequency used for the second data block causes a lack of a representation capability of a sample.

A difference between steps in which the data sending device performs frequency increase based on the sampling frequency of the first data window when K1+T<K2, to obtain the sampling frequency of the second data block and step 521 to step 524 lies in that in step 521, the data sending device successively increases the sampling frequency based on the current sampling frequency, and a determining condition in step 524 is opposite to that in step 524. Details are not described herein again.

In this embodiment, a manner of adjusting the collection frequency of the second data block by the data sending device is described based on the first data window and the second data window. However, in another possible embodiment, the data feature may indicate a change between more than two data windows in the first data block. For example, changes of a data feature obtained in the first data window in all sampling periodicity are from 1 to 100, from 1 to 100, and from 1 to 100. Although the change is from 1 to 100 each time, if 1 and 100 are used as a whole, it is also considered that the data feature indicates that the first data block is in a stable state. In this case, the data sending device determines, based on the calculation in step 521 to step 524, to sample the second data block at a low collection frequency.

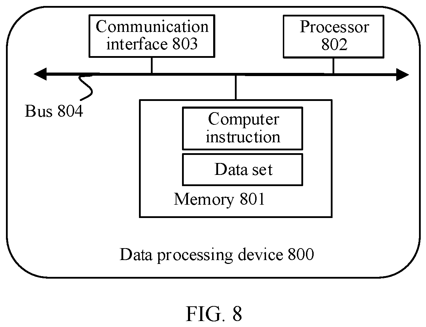

An embodiment of this application further provides a data processing device. FIG. 8 is a diagram of a structure of a data processing device according to an embodiment of this application. The data processing device 800 includes a memory 801, a processor 802, a communication interface 803, and a bus 804. The memory 801, the processor 802, and the communication interface 803 implement mutual communication connections through the bus 804.

The memory 801 may be a read-only memory, a static storage device, a dynamic storage device, or a random access memory. The memory 801 may store computer instructions. When the computer instructions stored in the memory 801 are executed by the processor 802, the processor 802 and the communication interface 803 are configured to perform the steps in the data processing method of a software system. For example, the communication interface 803 is configured to perform functions of the reporting module 420 and the receiving module 430 in the data processing system 400 in FIG. 4, and the processor 802 is configured to perform step 510, step 520, and step 530 in the data processing method shown in FIG. 5, and functions of modules such as the frequency adjustment module 410 and the reporting module 420 in the data processing system 400 in FIG. 4. The memory may further store a data set. For example, some storage resources in the memory 801 are allocated to an area, to store a program for implementing a function of the neural network model in embodiments of this application.

The processor 802 may be a general-purpose CPU, an application-specific integrated circuit (application-specific integrated circuit, ASIC), a GPU, or any combination thereof. The processor 802 may include one or more chips. The processor 802 may include an AI accelerator, for example, an NPU.

The communication interface 803 uses a transceiver module like but not limited to a transceiver, to implement communication between the data processing device 800 and another device or a communication network. For example, the communication interface 803 may be used to obtain sent data, a sampling frequency constraint condition, and the like, and obtain training data of the neural network model.

The bus 804 may include a path for information transmission between components (for example, the memory 801, the processor 802, and the communication interface 803) of the data processing device 800.

The data processing device 800 may be a computer (for example, a server) in a cloud data center, a computer in an edge data center, or a terminal.

Functions of the frequency adjustment module 410, the reporting module 420, the receiving module 430, the collection control module 440, the collection module 450, the analysis module 460, and the control module 470 may be deployed on each data processing device 800. That is, the data processing device 800 may be the data sending device or the data receiving device that integrates a plurality of modules in FIG. 4.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a terminal device. Certainly, the processor and the storage medium may alternatively exist in a network device or a terminal device as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A data processing method, applied to a data processing device, wherein the method comprises:
obtaining a data feature of a first data block, wherein the first data block is sampled data, and the data feature indicates a change between a plurality of valid data values in the first data block; and
determining a sampling frequency of a second data block based on the data feature of the first data block, wherein the second data block is to-be-sampled data.

2. The method according to claim 1, wherein the first data block comprises a plurality of data windows, each of the plurality of data windows comprises at least one indicator value, the plurality of data windows comprise a first data window and a second data window, the data feature of the first data block indicates data features of the plurality of data windows, and the obtaining a data feature of a first data block comprises:
determining a first valid data value of the first data window and a second valid data value of the second data window, wherein the second data window is a data window adjacent to the first data window; and
determining that the data feature of the first data block is a change value between the second valid data value and the first valid data value.

3. The method according to claim 2, wherein the determining a first valid data value of the first data window and a second valid data value of the second data window comprises:
sparsifying the first data window and the second data window;
using a quantity of pieces of valid data in the sparsified first data window as the first valid data value; and
using a quantity of pieces of valid data in the sparsified second data window as the second valid data value, wherein the valid data is an indicator value that meets a valid threshold condition.

4. The method according to claim 2, wherein the determining a sampling frequency of a second data block based on the data feature of the first data block comprises:
determining the sampling frequency of the second data block based on a data feature of the first data window and a data feature of the second data window.

5. The method according to claim 4, wherein the determining the sampling frequency of the second data block based on a data feature of the first data window and a data feature of the second data window comprises:
determining the sampling frequency of the second data block based on a change of the second valid data value relative to the first valid data value.

6. The method according to claim 5, wherein the determining the sampling frequency of the second data block based on a change of the second valid data value relative to the first valid data value comprises:
determining, based on a sampling frequency corresponding to the first data window, the sampling frequency of the second data block when a difference between the first valid data value and the second valid data value meets a preset condition.

7. The method according to claim 6, wherein the determining, based on a sampling frequency corresponding to the first data window, the sampling frequency of the second data block when a difference between the first valid data value and the second valid data value meets a preset condition comprises:
determining, based on the sampling frequency corresponding to the first data window, the sampling frequency of the second data block when the difference between the first valid data value and the second valid data value meets a preset frequency decrease condition; or
obtaining, based on the sampling frequency corresponding to the first data window, the sampling frequency of the second data block when the difference between the first valid data value and the second valid data value meets a preset frequency increase condition.

8. The method according to claim 7, wherein the determining, based on the sampling frequency corresponding to the first data window, the sampling frequency of the second data block when the difference between the first valid data value and the second valid data value meets a preset frequency decrease condition comprises:
successively decreasing the sampling frequency of the first data window, and sampling the second data window based on a sampling frequency obtained through each time of decreasing, to obtain a data subset;
determining a valid data value of the data subset obtained each time the sampling frequency is decreased; and
determining, when a change value between the first valid data value and the valid data value of the data subset is greater than a preset threshold, that the sampling frequency of the second data block is a sampling frequency corresponding to the data subset.

9. The method according to claim 7, wherein the obtaining, based on the sampling frequency corresponding to the first data window, the sampling frequency of the second data block when the first valid data value and the second valid data value meet a preset frequency increase condition comprises:
successively increasing the sampling frequency of the first data window, and sampling the second data window based on a sampling frequency obtained through each time of increasing, to obtain a data subset;
determining a valid data value of the data subset obtained each time the sampling frequency is increased; and
determining, when a change value between the first valid data value and the valid data value of the data subset is less than or equal to a preset threshold, that the sampling frequency of the second data block is a sampling frequency corresponding to the data subset.

10. The method according to claim 1, wherein the determining a sampling frequency of a second data block based on the data feature of the first data block comprises:
inputting the data feature of the first data block into a neural network model, to obtain the sampling frequency that is of the second data block and that is output by the neural network model, wherein the neural network model is obtained by performing model training by using the data feature of the first data block as a sample and using a sampling frequency of the first data block as a label of the sample.

11. The method according to any one of claims 1 to 10, wherein the data processing device is a data transmitting end, and the determining a sampling frequency of a second data block based on the data feature of the first data block comprises:
determining the sampling frequency of the second data block based on a sampling frequency constraint condition and the data feature of the first data block, wherein the sampling frequency constraint condition is obtained from a data receiving end.

12. The method according to claim 11, wherein the method further comprises:
sampling the second data block based on the sampling frequency of the second data block, to obtain transmission data; and
sending the transmission data to the data receiving end.

13. The method according to any one of claims 1 to 10, wherein the data processing device is a data receiving end, and the method further comprises:
sending the sampling frequency of the second data block to a data transmitting end; and
receiving transmission data sent by the data transmitting end, wherein the transmission data is obtained by the data transmitting end by sampling the second data block based on the sampling frequency of the second data block.

14. The method according to claim 13, wherein the method further comprises:
sending a sampling frequency constraint condition to the data transmitting end.

15. The method according to claim 13 or 14, wherein the method further comprises:
analyzing the transmission data, to obtain an analysis result of the transmission data.

16. A data processing device, wherein the data processing device comprises a memory and at least one processor, the memory is configured to store a group of computer instructions, and when executing the group of computer instructions, the processor performs operation steps of the method according to any one of claims 1 to 15.

17. A data processing system, comprising a frequency adjustment module, a reporting module, and a receiving module, wherein
the frequency adjustment module is configured to: obtain a data feature of a first data block, wherein the first data block is sampled data, and the data feature indicates a change between a plurality of valid data values in the first data block; and determine a sampling frequency of a second data block based on the data feature of the first data block, wherein the second data block is to-be-sampled data;
the reporting module is configured to: sample the second data block based on the sampling frequency of the second data block, to obtain transmission data; and send the transmission data; and
the receiving module is configured to receive the transmission data.

18. The system according to claim 17, wherein the system further comprises an analysis module; and
the analysis module is configured to analyze the transmission data read from the receiving module, to obtain an analysis result of the transmission data.

19. The system according to claim 18, wherein the system further comprises a control module; and
the control module is configured to send a sampling frequency constraint condition to the frequency adjustment module based on the analysis result.

20. A readable storage medium, comprising computer software instructions, wherein when the computer software instructions are run in a data processing device, the data processing device performs operation steps of the method according to any one of claims 1 to 15.
